# EUROPEAN PATENT SPECIFICATION

(11) **EP 0 998 128 B1**
(45) Date of publication and mention of the grant of the patent: **27.06.2007**
(21) Application number: 99308511.7
(22) Date of filing: 27.10.1999
(51) Int. Cl.: H04N 1/50, H04N 1/52, G03G 15/00, G03G 15/01

(54) **Printer and method of correcting color registration error thereof**
Drucker und Verfahren zur Korrektur von Farbausrichtungsfehlern davon
Imprimante et procédé de correction d'erreur de superposition des couleurs de celle-ci

(30) Priority: 29.10.1998 KR 9845724
(43) Date of publication of application: 03.05.2000
(73) Proprietor: SAMSUNG ELECTRONICS CO., LTD., Suwon-City, Kyungki-do (KR)
(72) Inventor: Eom, Yoon-seop, Jangan-gu, Suwon-city, Kyungki-do (KR); An, Seung-deog, Suji-eup, Yongin-city, Kyunkgi-do (KR); Kim, Nam-ryoung, Paldal-gu, Suwon-city, Kyungki-do (KR); Park, Sang-shin, Paldal-gu, Suwon-city, Kyungki-du (KR); Lee, Beom-ro, Seodaemun-gu, Seoul (KR)
(74) Representative: Benson, Christopher

(56) References cited:
- EP-A- 0 575 162
- EP-A- 0 598 566
- EP-A- 0 717 323
- EP-A- 0 774 859
- US-A- 5 523 823
- US-A- 5 579 092
- US-A- 5 666 590
- US-A- 5 819 140

## Description

The present invention relates to a printer designed to be able to correct registration of images of different colors at wrong areas, and a method of correcting a color registration error.

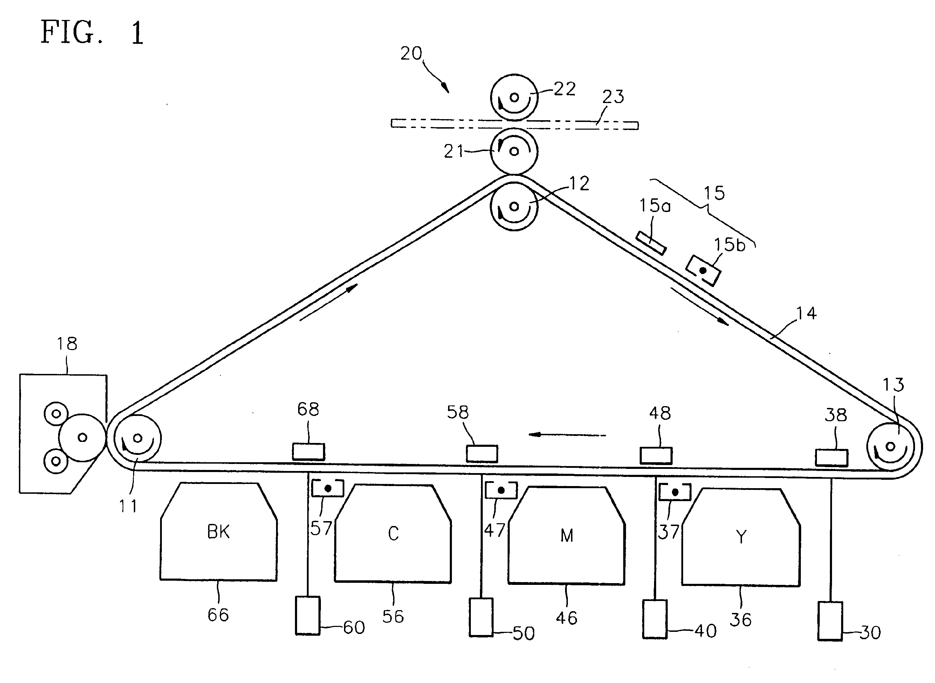

Referring to Figure 1 showing a cross-sectional view of a general liquid electrophotographic printer, a reset device 15, optical scanning devices 30, 40, 50, 60, optical detectors 38, 48, 58 and 68, developing devices 36, 46, 56 and 66, a drying device 18, and a transfer device 20 are installed around the circulation path of a photoreceptor belt 14 circulating by means of and around a plurality of rollers 11, 12 and 13. Reference numeral 15a is an exposing device for erasing an electrostatic latent image, and reference numerals 15b, 37, 47, and 57 are chargers for charging the photoreceptor belt 14 with a predetermined potential to have a photoreceptor belt on which a new electrostatic latent image can be registered.

In a printing process, first, when the leading end of an image writing page area determined on the photoreceptor belt 14 reaches the scanning position of the first optical scanning device 30, the first optical scanning device 30 projects light corresponding to yellow image information. An electrostatic latent image formed on the photoreceptor belt 14 by the first optical scanning device 30 is developed by the first developing device 36 for supplying a yellow developer (Y). The page area on the photoreceptor belt 14 is charged by the charger 37 so that a new electrostatic latent image can be written onto the page area. Next, when the charged page area reaches the scanning position of the second optical scanning device 40, the second optical scanning device 40 projects light corresponding to magenta-color image information. Another electrostatic latent image formed on the photoreceptor belt 14 by the second optical scanning device 40 is developed by the second developing device 46 for supplying a magenta color developer (M).

Such a process is continued through the third and fourth optical scanning devices 50 and 60 for projecting cyan-color image information and black image information, and through the third and fourth developing devices 56 and 66 for supplying a cyan-color developer (C) and a black developer (BK). Consequently, a color image is formed on the photoreceptor belt 14 passed through the fourth developing device 66. The color image formed of a developing material on the photoreceptor belt 14 is first transferred to a transfer roller 21 whose part rotates in contact with the photoreceptor belt 14, via the drying device 18 for removing liquid carrier. The color image transferred to the transfer roller 21 is then transferred to a sheet of paper 23 entering between the transfer roller 21 and a fixing roller 22.

In this printer, when the optical scanning devices 30, 40, 50 and 60 sequentially write respective color image information, to be written on the same page, on the proceeding photoreceptor belt 14, if the respective color image information are registered at wrong areas, a desired image cannot be obtained. Color registration error means that different color images are not registered at correct pixel writing positions on the photoreceptor belt 14.

In order to correct this color registration error, in the prior art, the image of a predetermined test pattern is commanded to be printed, and an inspector measures the distance difference between adjacent test patterns of different colors output on the paper 23 to calculate the amount of color registration error. However, this method is complicated in that the inspector must manually calculate the color registration error, and has a high possibility of artificial errors being included during the calculation of the error amount. In contrast, there is a method in which test patterns for each color are printed using all of the developing devices 36, 46, 56 and 66 by a normal printing method, and the amount of color registration error is calculated by detecting information associated with the interval between the printed test patterns of different colors using an image information acquisition sensor such as a CCD. However, image information acquisition sensors for respective colors must be installed to accurately measure a color registration error using this method, thus complicating the installation.

EP-A-0 717 323 discloses a method and apparatus for improving registration between colors in a black first printing machine. The method comprises forming a black mask having voids in the shape of a registration mark on a photoreceptor. A high contract color is then overwritten on the mask and in the voids, forming marks which indicate the position of the black image. A delay time measurement between a registration mark of a non-black color and the non-black color in the voids of the black mask will provide the relative registration between the black and non-black color images as those registration marks on the photoreceptor pass a marks-on-belt sensor.

EP-A-0 291 738 discloses an apparatus for forming images. For registration purposes it has mark detectors for detecting marks at predetermined positions on the conveying belt. It further comprises of beam detectors being outside the belt which are used for (horizontal) line synchronisation.

EP-A-0 598 566 discloses a method and apparatus for color registration control. The apparatus comprises an image transfer means for transferring a plurality of images, a first image forming means for forming a first registration indicia on the image transfer means, and a second image forming means for forming a second registration indicia on the image transfer means. The image forming apparatus further includes a registration indicia sensing means for sensing the position of the first and second registration indicia, a misregistration determining means for determining misregistration of the second image forming means based upon the positioning of the second registration indicia relative to the first registration indicia. The apparatus corrects the misregistration of the second image forming means as determined by the misregistration determining means.

It is an aim of the present invention to provide a printer which can internally and accurately measure and correct a color registration error without adding a large number of components, and a method of correcting the color registration error.

According to the present invention there is provided a printer as set forth in claim 1 appended hereto. Also according to the present invention there is provided a method as set forth in claim 6 appended hereto. Preferred features of the invention will be apparent from the dependent claims and the description which follows:

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 is a cross-sectional view of the engine of a general liquid electrophotographic printer;
Figure 2 is a block diagram of a printer according to the present invention;
Figure 3 is a cross-sectional view illustrating the arrangement relationship between the printing engine and the pattern position detection sensor unit of Figure 2;
Figure 4 is a cross-sectional view illustrating another arrangement relationship between the printing engine and the pattern position detection unit of a printer according to the present invention;
Figure 5 is a cross-sectional view illustrating an example of the concrete configuration of the pattern position detection unit of Figure 2;
Figure 6 is a flowchart illustrating a method of correcting a color registration error, according to the present invention;
Figure 7 is a graph showing the waveforms of sensor outputs corresponding to images of different colors when test pattern of different colors are developed with corresponding color developing materials;
Figure 8 is a perspective view of part of the printing engine of Figures 3 and 4 for illustrating the operation of the printing engine and the cause of a color registration error depending on the operation of the printing engine;
Figure 9 is a block diagram of an example of a main scan directional color registration error detection test pattern which is applied to the present invention;
Figures 10A and 10B are flowcharts illustrating a process for correcting a main scan directional color registration error using the test pattern of Figure 9;
Figure 11 is a block diagram of an example of a sub-scan directional color registration error detection test pattern which is applied to the present invention;
Figure 12 is a block diagram of a still another example of a color registration error detection test pattern which is applied to the present invention;
Figures 13A and 13B are flowcharts illustrating a process for correcting a color registration error using the test pattern of Figure 12; and
Figure 14 is a plan view showing the alignment of polygonal rotating mirrors which rotate at normal speed within optical scanners, to illustrate a process for correcting a generated sub-scan directional color registration error.

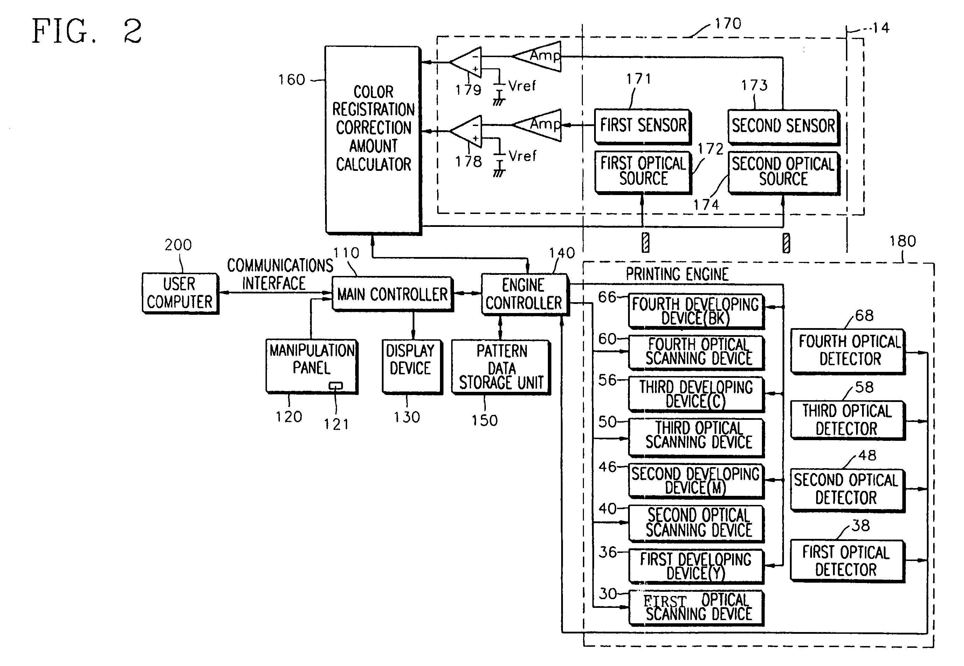

Figure 2 is a block diagram of a printer according to the present invention. The same reference numerals as those in Figure 1 denote the same components.

Referring to Figure 2, the printer includes a main controller 110, a manipulation panel 120, a display device 130, an engine controller 40, a pattern data storage unit 150, a color registration error correction amount calculator 160, a pattern position detection unit 170, and a printer engine 180.

The printing engine 180 has mechanical devices which are controlled by the engine controller 140 to print a desired image on paper.

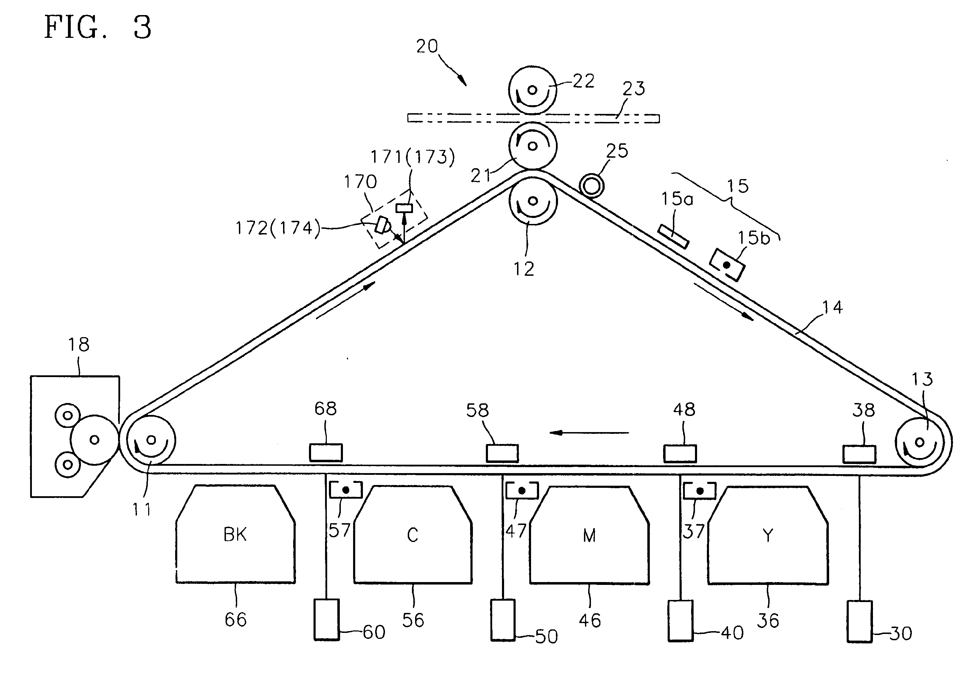

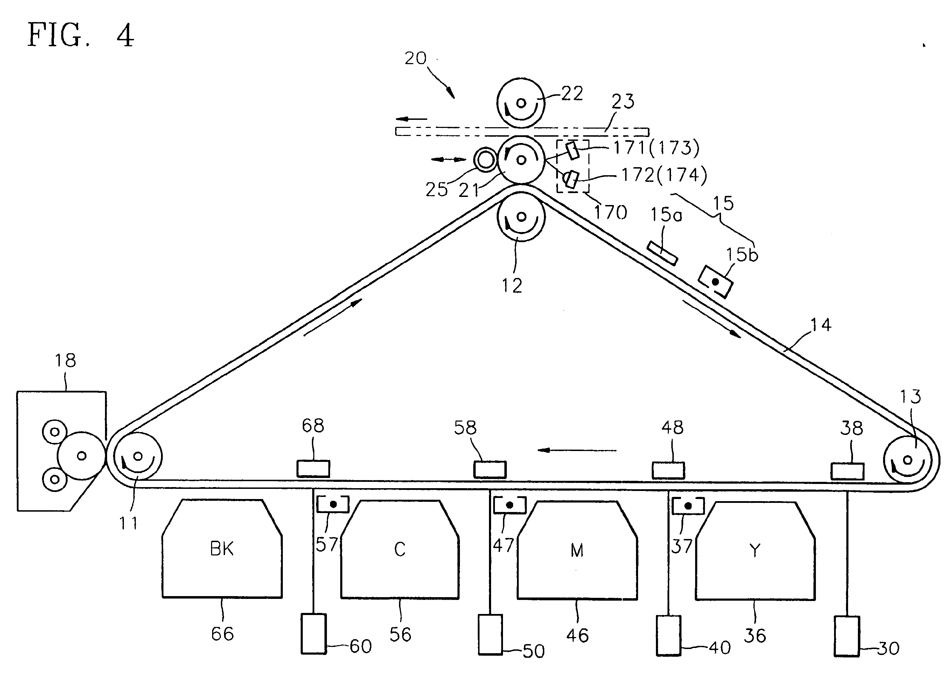

Referring to Figures 3 and 4 showing a liquid electrophotographic printer engine, the printer engine 180 includes a photoreceptor belt 14, a reset device 15, optical scanning devices 30, 40, 50 and 60, optical detectors 38, 48, 58 and 68, developing devices 36, 46, 56 and 66, a drying device 18, and a transfer device 20. The photoreceptor belt 14 circulates along a path formed by a plurality of rollers 11, 12 and 13. Reference numeral 25 is a cleaning device for cleaning test patterns.

The first through fourth optical scanning devices 30, 40, 50 and 60 are controlled by the engine controller 140, and project pieces of color information associated with colors of yellow, magenta, cyan and black to the photoreceptor belt 14, respectively.

The first through fourth developing devices 36, 46, 56 and 66 supply yellow, magenta, cyan and black developers Y, M, C and BK to the photoreceptor belt 14, respectively.

The main controller 110 decodes print data transmitted from a user computer 200 via a communications interface, converts the decoded data into a bitmap image data suitable for driving the printer engine 180, and transmits the resultant data to the engine controller 140. The main controller 110 processes a signal input from the manipulation panel 120, and controls the display device 130 to display information.

The manipulation panel 120 is provided with a plurality of keys with which the functions of the printer can be selected. Preferably, a diagnosis key 121 for commanding execution of a color registration error diagnosing mode is provided on the manipulation panel 120.

The engine controller 140 controls all operations of the printer engine 180 to print an image corresponding to the bitmap image data transmitted from the main controller 110, during normal printing. When the engine controller 140 is commanded to execute the color registration error diagnosing mode by the main controller 110 through the manipulation of the diagnosis key 121, it controls the printer engine 180 so that test patterns recorded in the pattern data storage unit 150 can be formed on the photoreceptor belt 14. When correction data associated with the results of the formation of the test patterns is output from the color registration correction amount calculator 160, the engine controller 140 corrects control timing data associated with the image formation accomplished by the printer engine 180 using this correction data.

The pattern position detection unit 170 includes a first sensor 171, a first optical source 172, a second sensor 173, and a second optical source 174.

Each of the first and second sensors 171 and 173 photographs an image within its camera window view and outputs an electrical signal corresponding to the photographed image. CCD can be applied as both the first and second sensors 171 and 173.

The first and second optical sources 172 and 174, for increasing the image pickup sensitivities of the first and second sensors 171 and 173, are installed capable of projecting light toward the pickup object positions of the first and second sensors 171 and 173. Preferably, the color registration correction amount calculator 160 controls the light emission amounts of the first and second optical sources 172 and 174 using signals output from the sensors 171 and 173. The light emission amounts of the first and second optical sources 172 and 174 are controlled so that voltage levels output from the sensors 171 and 173 in response to received light are constant with respect to portions on which an image is not formed.

The first and second sensors 171 and 173 and the first and second optical sources 172 and 174 can be installed at any position facing the transmission path for a completely-formed image. The first and second sensors 171 and 173 and the first and second optical sources 172 and 174, for example, can be installed opposite to the photoreceptor belt 14 between the drying device 18 and the transfer device 20 as shown in Figure 3, or can be installed opposite to the transfer roller 21 as shown in Figure 4.

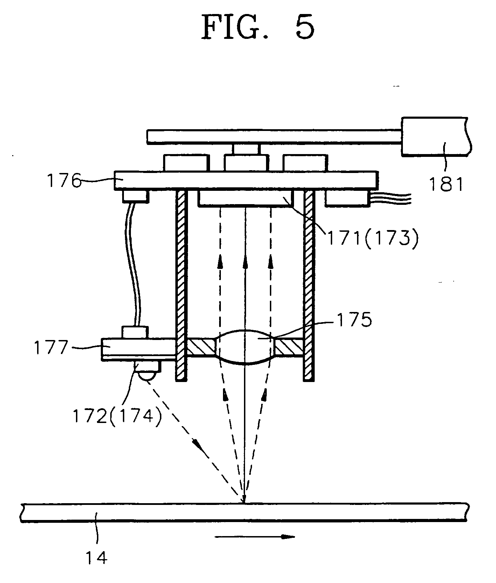

Also, as shown in Figure 5, it is preferable that a light focusing lens 175 for focusing light emitted from the pickup object areas on the sensors 171 and 173 is installed between the sensors 171 and 173 and the pickup object areas. Reference numeral 181 is a main frame, reference numeral 176 is a sensor board, and reference numeral 177 is an optical source supporting board.

Signals output from the first and second sensors 171 and 173 in response to received light are output to the color registration correction amount calculator 160 via an amplifier (AMP) and comparators 178 and 179.

The color registration correction amount calculator 160, as a color registration correction means, receives test pattern data applied to detect a color registration error by being interfaced with the engine controller 140, and calculates the amount of a color registration error by comparing the test pattern position information output from the first and second sensors 171 and 173 with the pattern data. Also, the color registration correction amount calculator 160 outputs correction data for correcting the calculated error amount to the engine controller 140.

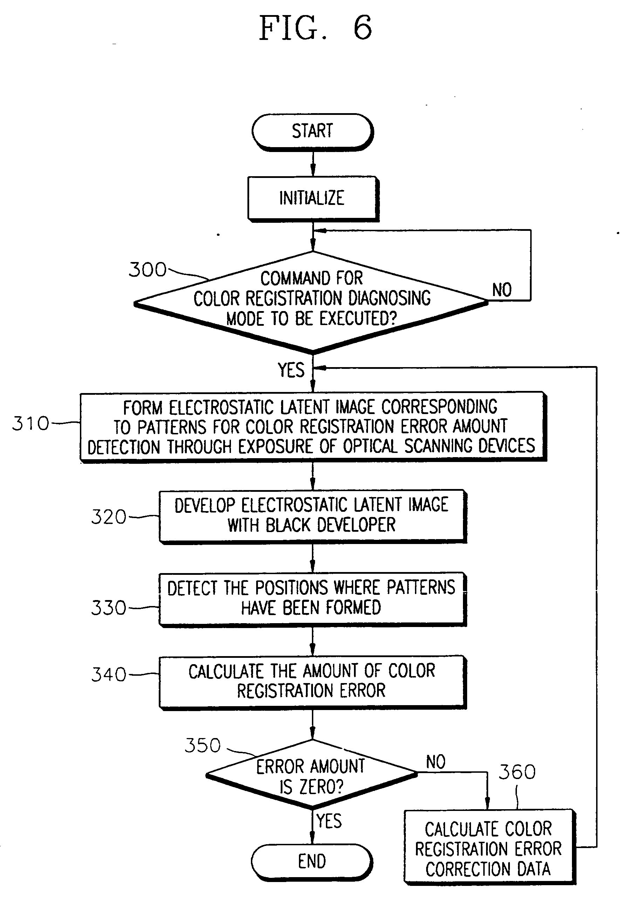

The process for correcting a color registration error of a printer will now be described in more detail referring to Figure 6.

First, a determination is made as to whether there is a command for a color registration diagnosing mode, in step 300. If it is determined in step 300 that there is a command for a color registration diagnosing mode, the test pattern data for each color set for color registration error detection is read from the pattern data storage unit 150, and the operations of the optical scanning devices 30, 40, 50 and 60 are controlled so that an electrostatic latent image corresponding to the read test pattern data can be formed on the photoreceptor belt 14, in step 310.

The electrostatic latent image formed by the optical scanning devices 30, 40, 50 and 60 on the photoreceptor belt 14 is developed by a selected developing device, preferably, the fourth developing device 66 for supplying a black developer (BK), in step 320.

The position information between the test patterns formed on the photoreceptor belt 14 is detected by the first and second sensors 171 and 173, in step 330.

The color registration correction amount calculator 160 calculates the amount of color registration error corresponding to the difference between the position value of the applied test pattern data and the detected position value of the test pattern, in step 340.

When the calculated error amount is determined to be zero in step 350, the execution of the color registration diagnosis is concluded with the determination that no color registration error exists.

When it is determined in step 350 that there is a certain amount of error, correction data suitable for color registration error is calculated and output to the engine controller 140, in step 360. The engine controller 140 corrects data related to engine control for image formation using the received correction data. Subsequent image formation accomplished by the printer engine 180 is based on the corrected engine control related data.

Preferably, the above-described process is repeated until the error amount is determined to be zero.

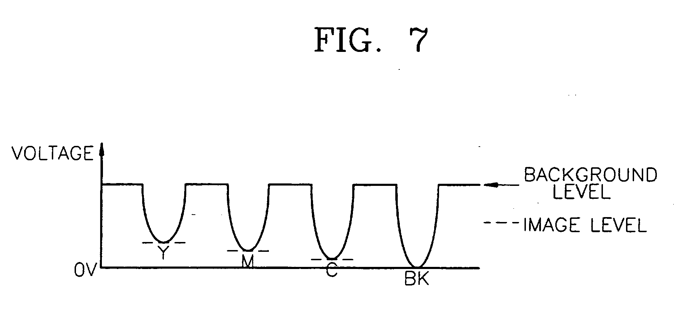

In this color registration error correcting process, electrostatic latent images, formed on the photoreceptor belt 14 in response to test pattern data by the optical scanning devices 30, 40, 50 and 60 used to project information of different colors, are developed with a single color, for example, a black developer (BK). This case has the following advantage. When the electrostatic latent images formed by the optical scanning devices 30, 40, 50 and 60 are developed with developers of different colors, the output signals of the first and second sensors 171 and 173 vary according to the color of each test pattern on the basis of a background level corresponding to light incident from areas of the photoreceptor belt 14 on which no image is formed, as shown in Figure 7. Such a result makes it difficult to accurately detect the positions of the test patterns of different colors, or requires a more complicated circuit to accomplish accurate position detection. However, when the test patterns are developed with a single color as in the present invention, accurate image detection determination can be made from the output signals of the first and second sensors 171 and 173, and the configuration of a circuit therefor is simplified.

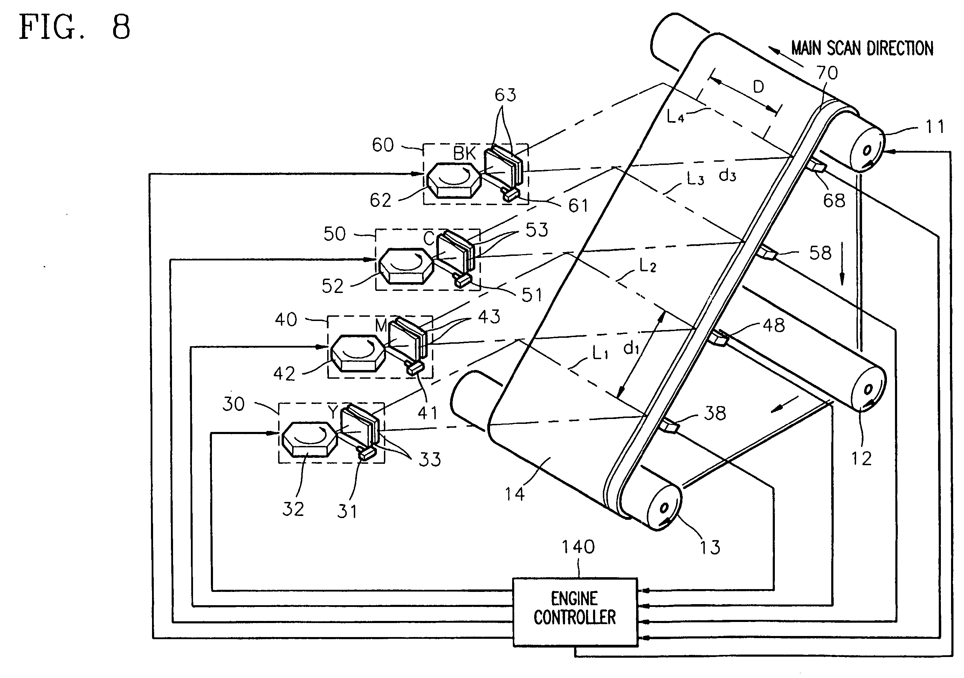

The color registration error correcting process will also be seen in association with the operation of the printer engine 180, with reference to Figure 8.

When the leading edge of a page area set on the photoreceptor belt 14 reaches the scanning line (L₁) of the first optical scanning device 30, yellow color image information scan for one line is initiated after a delay time determined in synchronization with a pulse signal output from the first optical detector 38 in response to received light of projected light. Here, the determined delay time corresponds to the time from the drop point of time of the pulse signal corresponding to the time the projected light reaches the edge of the photoreceptor belt 14, until a polygonal rotating mirror 32 rotating at constant speed is rotated at an angle capable of reflecting light emitted from the optical source 31 toward the leading edge of a given image writing area (D). After the image information scan for one line, light emission is paused. When the next reflective facet of the rotating multi-faceted mirror 32 is situated to be capable of reflecting light, light is emitted until a pulse signal is output from the optical detector 38. After a pulse signal is output from the optical detector 38, light emission is paused during the determined delay time, and the image information for another line is then scanned.

The second optical scanning device 40 scans the image information for a magenta color by the same method as the above-described driving method of the first optical scanning device 30, after the photoreceptor belt 14 moves a distance (d₁) from the scan line (L₁) of the first optical scanning device 30, at which the page area set on the photoreceptor belt 14 arrives, to the scan line (L₂) of the second optical scanning device 40.

The third and fourth optical scanning devices 50 and 60 form images of cyan color information and black color information by the same method as the driving method of the first optical scanning device 30, respectively, when the leading edge of the set page area reaches the scan lines L₃ and L₄ thereof. Reference numerals 41, 51 and 61 are optical sources, reference numerals 42, 52 and 62 are rotating multi-faceted mirrors, and reference numerals 33, 43, 53 and 63 are lens units.

In this image formation method, the image information for each color sequentially scanned by the optical scanning devices 30, 40, 50 and 60 may be registered out of given pixels on one page area set on the photoreceptor belt 14. In this case, a color registration error must be corrected.

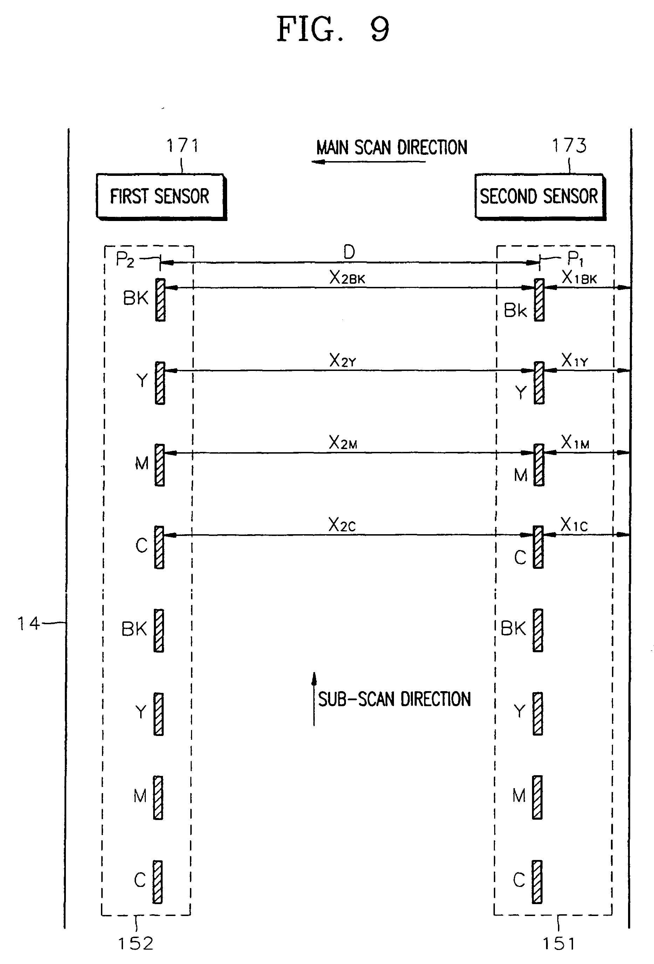

Figure 9 shows an example of test patterns which are applied to correct a color registration error with respect to the main scan direction (a direction perpendicular to the traveling direction of the photoreceptor belt 14) being a direction in which light is projected, among color registration errors. Reference characters BK, Y, M and C denote patterns formed by the fourth, first, second, and third optical scanning devices 60, 30, 40, and 50, respectively. All of these patterns are developed with the black developer of the fourth developing device 66. Test pattern data are set to be aligned in strips at predetermined intervals in the sub-scan direction on main scan directional image writing start and close positions P1 and P2 on the image writing area D.

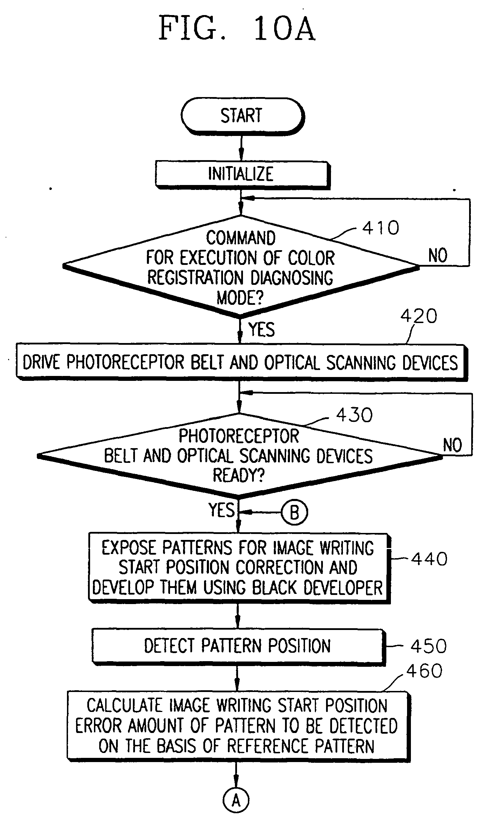

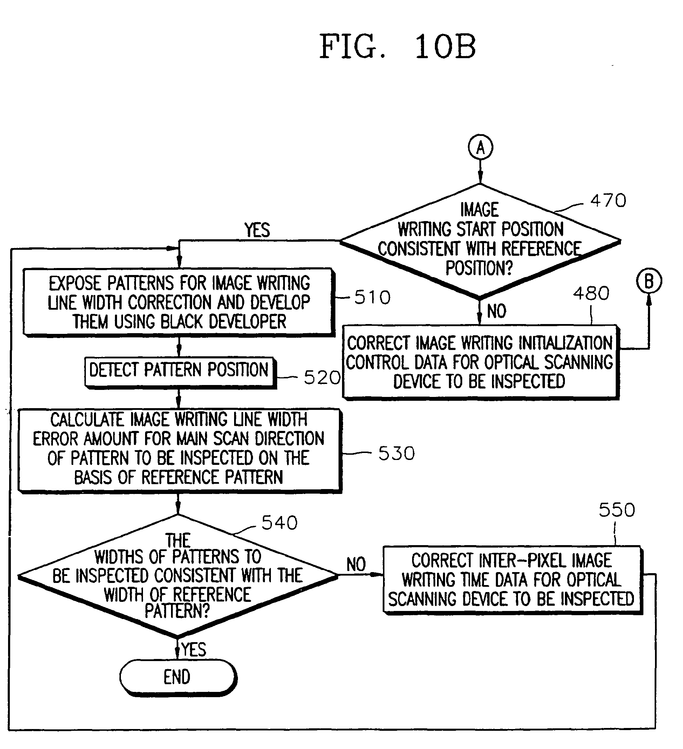

A process for correcting a main scan directional color registration error through this test pattern formation process will now be described referring to Figures 10A and 10B.

First, when it is determined in step 410 that there is a command for execution of a color registration diagnosing mode, rollers 11, 12 and 13 and rotating multi-faceted mirrors 32, 42, 52 and 62 are driven, in step 420. Here, it is preferable that the photoreceptor belt 14 rotates at a constant speed set lower than a speed set upon normal printing in order to increase the accuracy of measurement. When it is determined in step 430 that the photoreceptor belt 14 and the rotating multi-faceted mirrors 32, 42, 52 and 62 of the optical scanning devices 30, 40, 50 and 60 rotate at the set speed, the optical scanning devices 30, 40, 50 and 60 are driven to form electrostatic latent images corresponding to the test pattern data in a first pattern portion 151 in FIG 9, using the output signals of the optical detectors 38, 48, 58 and 68 in response to light received thereby. That is, when the page area set on the photoreceptor belt 14 reaches the scan line (L₁), the first optical scanning device 30 projects light corresponding to test pattern data after a predetermined delay time corresponding to the time from the drop point of time of the pulse signal of the optical detector 38 corresponding to the end of light reception by the optical detector 38, to the initiation of a main scan directional line image. The second through fourth optical scanning devices 40, 50 and 60 project light corresponding to test pattern data using the output pulse signals of the optical detectors 48, 58 and 68 after page synchronous generation times as delay times initially set for the time from when the page area set on the photoreceptor belt 14 reaches the scan line L₁ of the first optical scanning device 30 to when the page area reaches the respective scan lines L₂, L₃ and L₄.

Test pattern electrostatic latent images formed by the optical scanning devices 30, 40, 50 and 60 on the photoreceptor belt 14 are developed by the fourth developing device 66 in step 440.

The position information of these test patterns is detected by the second sensor 173 in step 450.

When the fourth optical scanning device 60 is selected as a reference optical scanning device, the color registration correction amount calculator 160 calculates the main scan directional error amounts of test patterns Y, M and C formed by the optical scanning devices 30, 40 and 50 on the basis of the position of a test pattern BK formed by the fourth optical scanning device 60, in step 460. That is, the error amounts of the distances X_{1Y}, X_{1M} and X_{1C} between the edge of the belt 14 and each of the patterns Y, M and C formed by the optical scanning devices 30, 40 and 50 are calculated on the basis of the distance X_{1BK} between the edge of the belt 14 and the reference pattern BK. A determination of whether an image writing start position is consistent with a reference position is made on the basis of the calculated error amount, in step 470. If it is determined in step 470 that a certain amount of error exists, data related to image scan initiation is corrected, in step 480. Then, steps 440 through 470 are repeated.

On the other hand, if it is determined in step 470 that no error exists, a second pattern portion 152 is formed on the photoreceptor belt 14, in step 510. In step 510, the corrected first pattern portion 151 can be formed on the photoreceptor belt 14 together with the second pattern portion 152 to be corrected.

Through steps 520 and 530, it is calculated how the line widths X_{2Y}, X_{2M} and X_{2C} of the patterns Y, M and C formed by the optical scanning devices 30, 40 and 50 are deviated from the image writing line width X_{2BK} between the image writing start and close positions P1 and P2 of the reference pattern BK. Then, it is determined whether there is a certain amount of error, in step 540. If it is determined in step 540 that a certain amount of error exists, inter-pixel image scan time control data is corrected, in step 550. Thereafter, steps 510 through 540 are repeated.

On the other hand, after step 430, the first and second pattern portions 151 and 152 are formed together on the photoreceptor belt 14, and all of the image writing start position P1 and the image writing line widths can be calculated and corrected.

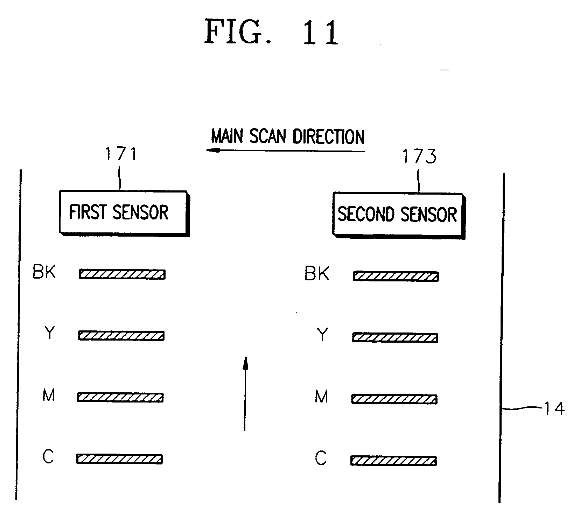

Meanwhile, a color registration error with respect to a sub-scan direction (a direction perpendicular to the main scan direction) can be corrected by calculating the error amount from the inter-pattern position information with respect to the sub-scan direction output from the sensors 171 and 173 using test patterns shown in Figure 11. In this case, the data for controlling the subscanning is corrected to make the distance between the test patterns constant.

Also, the test patterns of Figure 9 and those of Figure 11 can be formed together on the photoreceptor belt 14 through one printing process, in order to calculate the color registration errors with respect to both the main scan direction and the sub-scan direction.

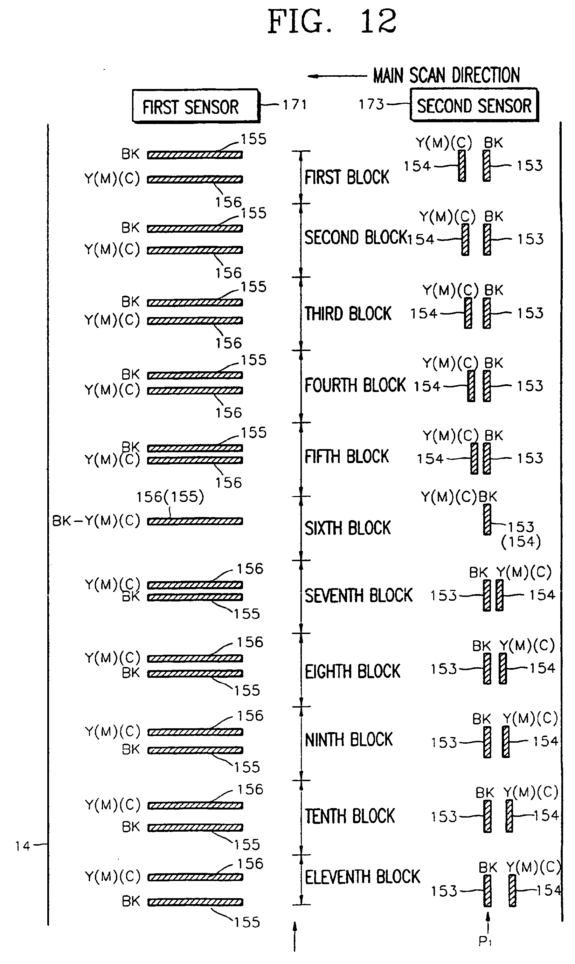

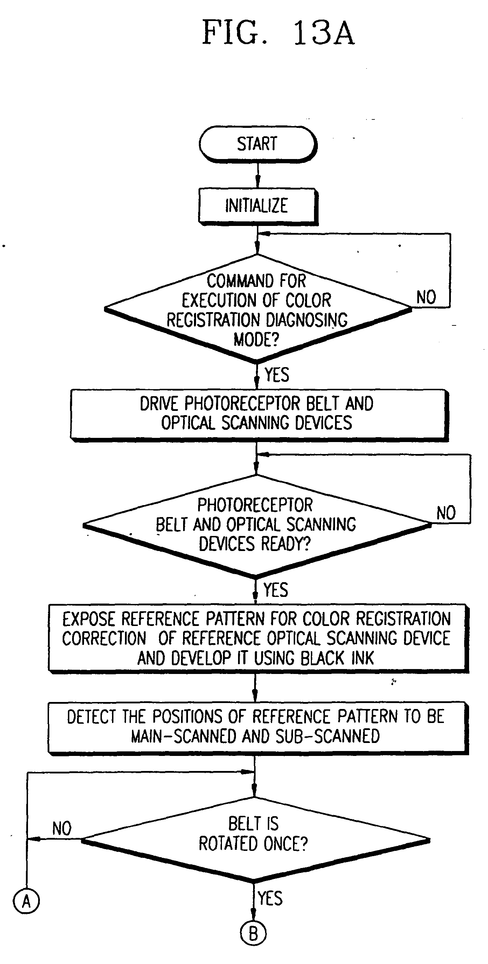

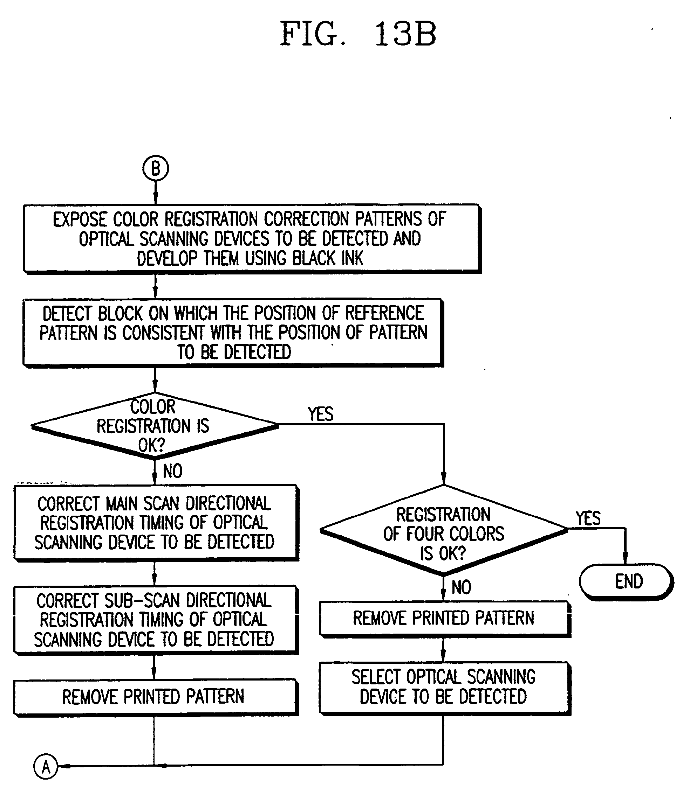

Still another test pattern and a color registration error correcting process using the same are shown in Figures 12 and 13.

Referring to Figure 12, first reference test patterns 153 are aligned at predetermined intervals along the sub-scan direction on the main scan directional image writing start position P1 corresponding to one edge of the image writing area D set in the middle of the photoreceptor belt 14 for the fourth optical scanning device 60 selected as a reference optical scanning device. First position variable patterns 154 are formed by optical scanning devices to be inspected, that is, the first through third optical scanning devices 30, 40 and 50, at positions where a main scan directional error amount gradually increases and decreases from negative to positive by unit values set along the sub-scan direction on the basis of where the first reference test patterns 153 are formed. According to the example shown in Figure 12, the main scan directional error component of the first position variable pattern 154 on a sixth block is set to be zero with respect to the first reference test pattern 153. The test patterns 153 and 154 are formed so that the error amounts of the variable test patterns 154 can gradually vary as it moves farther from the sixth block.

Accordingly, if only the block on which the first reference test pattern 153 is formed on the same position as the position of the first position variable pattern 154 is detected from the position information of the test patterns subsequently detected by the second sensor 173, image scan initiation time control data with respect to the main scan direction for the optical scanning devices 30, 40 and 50 can be corrected. Second reference test patterns 155, formed by the reference optical scanning device 60 selected to correct a sub-scan directional color registration error, are horizontally formed predetermined intervals apart from each other along the sub-scan direction of the photoreceptor belt 14. Second position variable patterns 156 formed by the optical scanning devices 30, 40 and 50 to be inspected are formed one by one along the sub-scan direction on positions where a sub-scan directional error amount gradually increases or decreases from negative to positive by set unit values on the basis of where the second reference test patterns 155 are formed. Then, the block on which the two patterns 155 and 156 are formed on the same position is detected by the above-described method, and control data for sub-scan directional image scan initiation time of the optical scanning devices 30, 40 and 50 can thus be compensated by an error amount applied to the detected block.

In case that the test patterns of Figure 12 are used, it is preferable that the color registration error amount of one of the optical scanning devices 30, 40 and 50 to be detected is calculated through one printing process. Figures 13A and 13B illustrate a process for correcting the color registration error of each of the optical scanning devices 30, 40 and 50 on the basis of the reference optical scanning device 60.

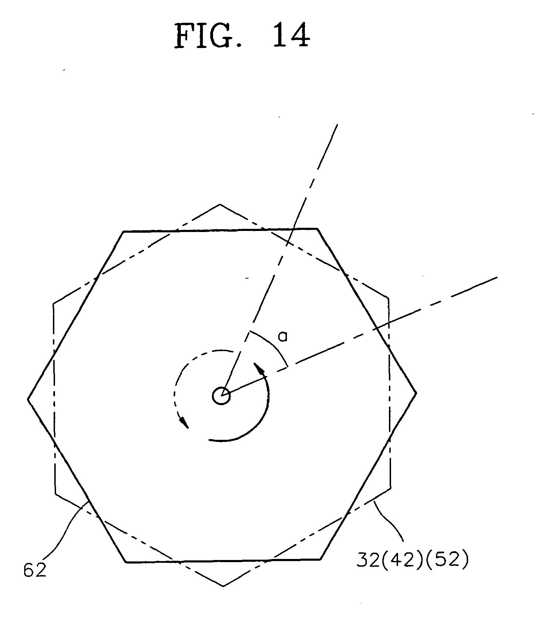

The main scan directional color registration error correction among the optical scanning devices 30, 40, 50 and 60 is accomplished by internally correcting the delay time from generation of a pulse signal from each of the optical detectors 38, 48, 58 and 68 in response to received light to image information scan initiation, and the scan interval for each pixel data so that the same number of pieces of pixel information can be registered on set positions within a set image line width. On the contrary, sub-scan directional color registration error correction between optical scanning devices 30, 40, 50 and 60 is accomplished by alignment adjustment between rotating multi-faceted mirrors 32, 42, 52 and 62 or scan disks (not shown: on which hologram patterns are formed to deflect incident light by rotation) applied as optical deflecting means of the applied optical scanning devices 30, 40, 50 and 60. That is, as shown in Figure 14, an alignment angle (a) corresponding to the stagger degree between the reflective facet of the rotating multi-faceted mirror 62 of the reference optical scanning device 60 and that of each of the rotating multi-faceted mirrors 32, 42 and 52 of the optical scanning devices 30, 40 and 50 having a sub-scan directional regisration error must be controlled. This alignment control data is obtained from the color registration correction amount calculator 160 according to the calculated sub-scan directional error amount. The engine controller 140 drives the rotating multi-faceted mirrors 32, 42, 52 and 62 at equal speeds according to the correction amount so that the reflective facet of the reference rotating multi-faceted mirror 62 and those of the remaining rotating multi-faceted mirrors 32, 42 and 52 can maintain an intersecting angle corresponding to the correction amount. At this time, color registration error is corrected.

According to the printer and the method of correcting a color registration error described above, an image is formed by developing electrostatic latent images corresponding to test patterns formed on a photoreceptor belt by optical scanning devices with a single color. Therefore, a structure for measuring error amounts from the test patterns is simple, and the accuracy of measurement can be improved.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A printer comprising:
a belt (14) circulating along a path formed by a plurality of rollers (11, 12, 13);
a plurality of optical scanning devices (30, 40, 50, 60) for scanning light;
an engine controller (146) arranged to control the plurality of optical scanning devices (30,40,50,60);
a plurality of developing devices (36, 46, 56, 66) for supplying developing materials of different colors;
a pattern position detecting means (170) for detecting the positions of test patterns formed in fixed positions on the belt (14) through a developing process;
a plurality of optical detectors (38,48,58,68) arranged to detect light emitted from the optical scanning devices (30,40,50,60);
**characterised in that**:
the belt (14) is a photoreceptor belt (14);
the plurality of optical scanning devices (30,40,50,60) are arranged to scan light onto the photoreceptor belt (14) and to form electrostatic latent images corresponding to test pattern data on the photoreceptor belt (14);
the plurality of developing devices (36,46,56,66) supply developing materials of different colours to the photoreceptor belt (14);
the plurality of optical detectors (38, 48, 58, 68) are arranged at a side of the photoreceptor belt (14) to detect part of the light emitted from the optical scanning devices (30, 40, 50, 60) and to output a signal in response thereto;
an engine controller (140) arranged to receive the signals output from the optical detectors (38,48,58,68) and to form the test patterns on the photoreceptor belt (14) to detect a color registration error between the optical scanning devices (30, 40, 50, 60) by controlling the driving of the optical scanning devices (30, 40, 50, 60), the developing devices (36, 46, 56, 66) and the rollers (11, 12, 13), wherein the engine controller (140) is arranged to control the optical scanning devices (30,40,50,60) to emit light until a drop point of a signal output from a corresponding optical detector (38,48,58,68), the drop point corresponding to a time the projected light reacher the edge of the photoreceptor belt (14), then D to pause light emission for a predetermined delay time from the drop point whilst the optical scanning devices (30,40,50,60) move in a main scan direction, and to initiate formation of the test pattern upon the photoreceptor belt (14) after the predetermined delay time; and
a color registration correction means (160) arranged to calculate a color registration error amount from the position information of the test patterns provided by the pattern position detection means (170), to calculate color registration correction data to correct the calculated colour registration error amount from the calculated error amount, and to output the calculated colour registration correction data to the engine controller (140) for correcting data related to engine control for image formation.

2. The printer of claim 1, wherein the engine controller (140) controls one selected developing device (66) to develop electrostatic latent images formed on the photoreceptor belt (14) in response to the test patterns by the optical scanning devices (30, 40, 50, 60) with a single color developing material.

3. The printer of claim 1 or 2, wherein the pattern position detection means (170) comprises:
first and second pattern position detection sensors (171, 173) spaced apart from each other opposite to an image writing surface of the photoreceptor belt(14); and
first and second optical sources (172, 174) for irradiating light toward the detecting areas of the first and second pattern position detection sensors (171, 173).

4. The printer of claim 1 or 2, wherein the pattern position detection means (170) comprises:
first and second pattern position detection sensors (171, 173) spaced apart from each other opposite to a transfer device (21) for transferring an image formed on the photoreceptor belt (14) to paper (23); and
first and second optical sources (172, 174) for irradiating light toward the detecting areas of the first and second pattern position detection sensors (171, 173).

5. The printer of any of claims 1 to 4, wherein a cleaning device (25) for cleaning the completely-developed test patterns is installed at a predetermined position on an image transmission path.

6. A color registration error correcting method for use in a printer, the method comprising the steps of:
forming (310), by a plurality of optical scanning devices (30, 40, 50, 60), electrostatic latent images corresponding to test patterns of different colors set for color registration error detection;
developing (320) the electrostatic latent images corresponding to test patterns with a plurality of developing devices (36,46,56,66);
detecting (330) the positions of the test patterns with a pattern position detecting means (170);
calculating (340) colour registration error amounts from detected test pattern position information;
**characterised by**:
(a) forming (310) the electrostatic latent images corresponding to test patterns on a photoreceptor belt (14) circulating along a path formed by a plurality of rollers (11, 12, 13) by using the plurality of optical scanning devices (30,40,50,60) arranged to beam light onto the photoreceptor belt (14) and received light output from a plurality of optical detectors (38, 48, 58, 68) arranged at a side of the photoreceptor belt (14) for detecting part of the light emitted from the optical scanning devices (30,40,50,60), wherein the optical scanning devices emit light until a drop point of a signal output from a corresponding optical detector (38,48,58,68), the drop point corresponding to a time the projected light reaches the edge of the photoreceptor belt (14), light emission is paused for a predetermined delay time from the drop point whilst. the optical device moves in a main scan direction, and the test pattern is formed on the photoreceptor belt after the predetermined delay time;
(b) developing (320) the different color electrostatic latent images with a single color developing material by one selected developing device (66) of the plurality of developing devices (36, 46, 56, 66) for supplying developing materials of different colors to the photoreceptor belt (14);
(c) detecting (330) the positions of the test patterns formed of the single color developing material with the pattern position detecting means (170);
(d) calculating (340) color registration error amounts from the detected test pattern position information; and
(e) obtaining (360) color registration correction data from the error amounts calculated in step (d) to correct data related for image formation.

7. The method of claim 6, further comprising repetition of steps (a) through (d) with the correction data obtained in step (e).

8. The method of claim 6 or 7, wherein the test patterns are set to be aligned on the image writing start and close positions corresponding to the both ends of an image writing area set in the middle portion of the photoreceptor belt (14), and predetermined intervals apart from each other along the traveling direction of the photoreceptor belt (14).

9. The method of any of claims 6 to 8, wherein the test patterns comprise:
first reference test patterns (153) spaced apart from each other at predetermined intervals along the sub-scan direction on the main-scan directional image writing start position corresponding to one end of the image writing area set in the middle portion of the photoreceptor belt (14) and formed by a reference optical scanning device (60) selected from the plurality of optical scanning devices (30, 40, 50, 60); and
first position variable patterns (154) formed by optical scanning devices (30, 40, 50) except for the reference optical scanning device (60) so that main-scan directional error amounts gradually vary along the sub-scan direction on the basis of the formation positions of the first reference test patterns.

10. The method of any of claims 6 to 8, wherein the test patterns comprise:
second reference test patterns (155) horizontally formed at predetermined intervals apart from each other along the sub-scan direction of the photoreceptor belt (14) by the reference optical scanning device (60); and
second position variable patterns (156) formed by optical scanning devices (30, 40, 50) except for the reference optical scanning device (60) so that sub-scan directional error amounts gradually vary along the sub-scan direction on the basis of the formation positions of the second reference test patterns.

11. The method of any of claims 6 to 10, wherein the photoreceptor belt (14) is moved slower than a speed set upon normal printing, during the steps (a) through (d) for calculating a color registration error amount.

## Patentansprüche

1. Drucker, umfassend:
ein Band (14), das entlang eines von einer Mehrzahl von Walzen (11, 12, 13) erzeugten Weges umläuft;
eine Mehrzahl von optischen Abtastvorrichtungen (30, 40, 50, 60) zum Abtasten von Licht;
eine Motorsteuerung (146), die eingerichtet ist, um die Mehrzahl von optischen Abtastvorrichtungen (30, 40, 50, 60) zu steuern;
eine Mehrzahl von Entwicklungsvorrichtungen (36, 46, 56, 66) zum Zuführen verschiedenfarbiger Entwicklungsmaterialien;
eine Musterpositionserfassungseinrichtung (170) zum Erfassen der Positionen von Testmustern, die in festen Positionen auf dem Band (14) durch einen Entwicklungsvorgang erzeugt werden;
eine Mehrzahl von optischen Detektoren (38, 48, 58, 68), die eingerichtet sind, um von den optischen Abtastvorrichtungen (30, 40, 50, 60) ausgesendetes Licht zu erfassen;
**dadurch gekennzeichnet, dass**:
das Band (14) ein Fotorezeptorband (14) ist;
die Mehrzahl von optischen Abtastvorrichtungen (30, 40, 50, 60) eingerichtet ist, um Licht auf dem Fotorezeptorband (14) abzutasten und elektrostatische latente Bilder entsprechend Testmusterdaten auf dem Fotorezeptorband (14) zu erzeugen; die Mehrzahl von Entwicklungsvorrichtungen (36, 46, 56, 66) dem Fotorezeptorband (14) verschiedenfarbige Entwicklungsmaterialien zuführt;
die Mehrzahl von optischen Detektoren (38, 48, 58, 68) an einer Seite des Fotorezeptorbandes (14) eingerichtet ist, um einen Teil des von den optischen Abtastvorrichtungen (30, 40, 50, 60) ausgesendeten Lichtes zu erfassen und ein Signal in Reaktion hierauf auszugeben;
eine Motorsteuerung (140) eingerichtet ist, um von den optischen Detektoren (38, 48, 58, 68) ausgegebene Signale zu empfangen und die Testmuster auf dem Fotorezeptorband (14) zu erzeugen, um einen Farbregistrierungsfehler zwischen den optischen Abtastvorrichtungen (30, 40, 50, 60) zu erfassen, indem der Antrieb der optischen Abtastvorrichtungen (30, 40, 50, 60), der Entwicklungsvorrichtungen (36, 46, 56, 66) und der Walzen (11, 12, 13) gesteuert wird, wobei die Motorsteuerung (140) eingerichtet ist, um die optischen Abtastvorrichtungen (30, 40, 50, 60) derart zu steuern, dass sie Licht bis zu einem Abgangspunkt eines von einem entsprechenden optischen Detektor (38, 48, 58, 68) ausgegebenen Signals aussenden, wobei der Abgangspunkt einer Zeit entspricht, in der das projizierte Licht die Kante des Fotorezeptorbandes (14) erreicht, um anschließend die Lichtaussendung für eine vorbestimmte Verzögerungszeit ab dem Abgangspunkt anzuhalten, während sich die optischen Abtastvorrichtungen (30, 40, 50, 60) in einer Hauptabtastrichtung bewegen, und um die Erzeugung des Testmusters auf dem Fotorezeptorband (14) nach der vorbestimmten Verzögerungszeit einzuleiten; und
eine Farbregistrierungskorrektureinrichtung (160) eingerichtet ist, um einen Farbregistrierungsfehlerbetrag aus der von der Musterpositionserfassungseinrichtung (170) bereitgestellten Positionsinformation der Testmuster zu berechnen, um Farbregistrierungskorrekturdaten zu berechnen, um den berechneten Farbregistrierungsfehlerbetrag aus dem berechneten Fehlerbetrag zu korrigieren und um die berechneten Farbregistrierungskorrekturdaten an die Motorsteuerung (140) zur Korrektur von Daten betreffend die Motorsteuerung zur Bilderzeugung auszugeben.

2. Drucker nach Anspruch 1, bei dem die Motorsteuerung (140) eine ausgewählte Entwicklungsvorrichtung (66) steuert, um auf dem Fotorezeptorband (14) erzeugte elektrostatische latente Bilder in Reaktion auf die Testmuster von den optischen Abtastvorrichtungen (30, 40, 50, 60) mit einem einfarbigen Entwicklungsmaterial zu entwickeln.

3. Drucker nach Anspruch 1 oder 2, bei dem die Musterpositionserfassungseinrichtung (170) umfasst:
erste und zweite Musterpositionserfassungssensoren (171, 173), die gegenüber einer Bildschreibfläche des Fotorezeptorbandes (14) voneinander beabstandet sind; und
erste und zweite optische Quellen (172, 174) zum Ausstrahlen von Licht hin zu den Erfassungsflächen der ersten und zweiten Musterpositionserfassungssensoren (171, 173).

4. Drucker nach Anspruch 1 oder 2, bei dem die Musterpositionserfassungseinrichtung (170) umfasst:
erste und zweite Musterpositionserfassungssensoren (171, 173), die gegenüber einer Übertragungsvorrichtung (21) zur Übertragung eines auf dem Fotorezeptorband (14) erzeugten Bildes auf ein Papier (23) voneinander beabstandet sind; und
erste und zweite optische Quellen (172, 174) zum Ausstrahlen von Licht hin zu den Erfassungsflächen der ersten und zweiten Musterpositionserfassungssensoren (171, 173).

5. Drucker nach einem der Ansprüche 1 bis 4, bei dem eine Reinigungsvorrichtung (25) zum Reinigen der vollständig entwickelten Testmuster an einer vorbestimmten Position in dem Bildübermittlungsweg angebracht ist.

6. Verfahren zur Korrektur von Farbregistrierungsfehlern zur Verwendung in einem Drucker, wobei das Verfahren die nachfolgenden Schritte umfasst:
ein durch eine Mehrzahl von optischen Abtastvorrichtungen (30, 40, 50, 60) erfolgendes Erzeugen (310) von elektrostatischen latenten Bildern entsprechend verschiedenfarbigen Testmustern, die zur Farbregistrierungsfehlererfassung gesetzt sind;
ein durch eine Mehrzahl von Entwicklungsvorrichtungen (36, 46, 56, 66) erfolgendes Entwickeln (320) der elektrostatischen latenten Bilder entsprechend Testmustern;
ein durch eine Musterpositionserfassungseinrichtung (170) erfolgendes Erfassen (330) der Positionen der Testmuster;
ein Berechnen (340) von Farbregistrierungsfehlerbeträgen aus erfasster Testmusterpositionsinformation;
**gekennzeichnet durch**:
(a) ein Erzeugen (310) der elektrostatischen latenten Bilder entsprechend Testmustern auf einem entlang eines von einer Mehrzahl von Walzen (11, 12, 13) erzeugten Weges umlaufenden Fotorezeptorband (14) unter Verwendung der Mehrzahl von optischen Abtastvorrichtungen (30, 40, 50, 60), die eingerichtet sind, um Licht auf das Fotorezeptorband (14) abzustrahlen und Licht zu empfangen, das von einer Mehrzahl von optischen Detektoren (38, 48, 58, 68) ausgegeben wird, die an einer Seite des Fotorezeptorbandes (14) eingerichtet sind, um einen Teil des von den optischen Abtastvorrichtungen (30, 40, 50, 60) ausgesendeten Lichtes zu erfassen, wobei die optischen Abtastvorrichtungen Licht bis zu einem Abgangspunkt eines von einem entsprechenden optischen Detektor (38, 48, 58, 68) ausgegebenen Signals aussenden, wobei der Abgangspunkt einer Zeit entspricht, in der das projizierte Licht die Kante des Fotorezeptorbandes (14) erreicht, die Lichtemission für eine vorbestimmte Verzögerungszeit ab dem Abgangspunkt angehalten wird, während sich die optische Vorrichtung in einer Hauptabtastrichtung bewegt, und das Testmuster auf dem Fotorezeptorband nach der vorbestimmtem Verzögerungszeit erzeugt wird;
(b) ein Entwickeln (320) der verschiedenfarbigen elektrostatischen latenten Bilder mit einem einfarbigen Entwicklungsmaterial **durch** eine ausgewählte Entwicklungsvorrichtung (66) aus der Mehrzahl von Entwicklungsvorrichtungen (36, 46, 56, 66) zum Zuführen von verschiedenfarbigen Entwicklungsmaterialien zu dem Fotorezeptorband (14);
(c) ein Erfassen (330) der Positionen der aus dem einfarbigen Entwicklungsmaterial erzeugten Testmuster **durch** die Musterpositionserfassungseinrichtung (170);
(d) ein Berechnen (340) von Farbregistrierungsfehlerbeträgen aus der erfassten Testmusterpositionsinformation; und
(e) ein Ermitteln (360) von Farbregistrierungskorrekturdaten aus den in Schritt (d) berechneten Fehlerbeträgen, um die betroffenen Daten zur Bilderzeugung zu korrigieren.

7. Verfahren nach Anspruch 6, des Weiteren umfassend eine Wiederholung der Schritte (a) bis (d) mit den in Schritt (e) ermittelten Korrekturdaten.

8. Verfahren nach Anspruch 6 oder 7, bei dem die Testmuster derart gesetzt sind, dass sie an den Bildschreibanfangs- und Schlusspositionen entsprechend den beiden Enden einer Bildschreibfläche gemäß Setzung in dem mittleren Abschnitt des Fotorezeptorbandes (14) und voneinander beabstandeten vorbestimmten Intervallen entlang der Verfahrrichtung des Fotorezeptorbandes (14) ausgerichtet sind.

9. Verfahren nach einem der Ansprüche 6 bis 8, bei dem die Testmuster umfassen:
erste Bezugstestmuster (153), die in vorbestimmten Intervallen entlang der Nebenabtastrichtung an der hauptabtastrichtungsgemäßen Bildschreibanfangsposition entsprechend einem Ende der Bildschreibfläche gemäß Setzung in dem mittleren Abschnitt des Fotorezeptorbandes (14) und Erzeugung durch eine optische Bezugsabtastvorrichtung (60), die aus der Mehrzahl von optischen Abtastvorrichtungen (30, 40, 50, 60) ausgewählt ist, voneinander beabstandet sind; und
erste Positionsveränderungsmuster (154), die von den optischen Abtastvorrichtungen (30, 40, 50) außer der optischen Bezugsabtastvorrichtung (60) derart erzeugt werden, dass sich hauptabtastrichtungsgemäße Fehlerbeträge allmählich entlang der Nebenabtastrichtung auf Grundlage der Erzeugungspositionen der ersten Bezugstestmuster ändern.

10. Verfahren nach einem der Ansprüche 6 bis 8, wobei die Testmuster umfassen:
zweite Bezugstestmuster (155), die horizontal in vorbestimmten Intervallen voneinander beabstandet entlang der Nebenabtastrichtung des Fotorezeptorbandes (14) durch die optische Bezugsabtastvorrichtung (60) erzeugt werden; und
zweite Positionsveränderungsmuster (156), die von den optischen Abtastvorrichtungen (30, 40, 50) außer der optischen Bezugsabtastvorrichtung (60) derart erzeugt werden, dass sich nebenabtastrichtungsgemäße Fehlerbeträge allmählich entlang der Nebenabtastrichtung auf Grundlage der Erzeugungspositionen der zweiten Bezugstestmuster ändern.

11. Verfahren nach einem der Ansprüche 6 bis 10, bei dem das Fotorezeptorband (14) mit einer Geschwindigkeit, die langsamer als eine bei normalem Druck gesetzte Geschwindigkeit ist, während der Schritte (a1) bis (d) zur Berechnung eines Farbregistrierungsfehlerbetrages bewegt wird.

## Revendications

1. Imprimante comportant :
une courroie (14) circulant le long d'un trajet formé par une pluralité de rouleaux (11, 12, 13),
une pluralité de dispositifs de balayage optique (30, 40, 50, 60) pour amener une lumière à balayer,
une commande de moteur (146) agencée pour commander la pluralité de dispositifs de balayage optique (30, 40, 50, 60),
une pluralité de dispositifs de développement (36, 46, 56, 66) pour fournir des matériaux de développement de différentes couleurs,
des moyens de détection de position de motif (170) pour détecter les positions de motifs de test formés dans des positions fixées sur la courroie (14) par l'intermédiaire d'un traitement de développement,
une pluralité de détecteurs optiques (38, 48, 58, 68) agencés pour détecter une lumière émise par les dispositifs de balayage optique (30, 40, 50, 60),
**caractérisée en ce que** :
la courroie (14) est une courroie photoréceptrice (14),
la pluralité de dispositifs de balayage optique (30, 40, 50, 60) sont agencés pour amener une lumière à balayer la courroie photoréceptrice (14) et former des images latentes électrostatiques correspondant aux données de motif de test sur la courroie photoréceptrice (14),
la pluralité de dispositifs de développement (36, 46, 56, 66) fournissent des matériaux de développement de différentes couleurs à la courroie photoréceptrice (14),
la pluralité de détecteurs optiques (38, 48, 58, 68) sont agencés d'un côté de la courroie photoréceptrice (14) pour détecter une partie de la lumière émise par les dispositifs de balayage optique (30, 40, 50, 60) et émettre un signal en réponse à celle-ci,
une commande de moteur (140) agencée pour recevoir les signaux émis par les détecteurs optiques (38, 48, 58, 68) et former les motifs de test sur la courroie photoréceptrice (14) pour détecter une erreur de calage de couleur entre les dispositifs de balayage optique (30, 40, 50, 60) en commandant l'entraînement des dispositifs de balayage optique (30, 40, 50, 60), les dispositifs de développement (36, 46, 56, 66) et les rouleaux (11, 12, 13), la commande de moteur (140) étant agencée pour commander les dispositifs de balayage optique (30, 40, 50, 60) pour qu'ils émettent une lumière jusqu'à un point de chute d'un signal émis par un détecteur optique correspondant (38, 48, 58, 68), le point de chute correspondant à un moment où la lumière projetée atteint le bord de la courroie photoréceptrice (14), puis pour arrêter l'émission de lumière pendant un temps de retard prédéterminé à partir du point de chute alors que les dispositifs de balayage optique (30, 40, 50, 60) se déplacent dans une direction de balayage principale, et pour déclencher une formation du motif de test sur la courroie photoréceptrice (14) après le temps de retard prédéterminé, et
des moyens de correction de calage de couleur (160) agencés pour calculer une quantité d'erreur de calage de couleur à partir des informations de position des motifs de test fournies par les moyens de détection de position de motif (170), pour calculer des données de correction de calage de couleur pour corriger la quantité d'erreur de calage de couleur calculée à partir de la quantité d'erreur calculée, et pour émettre les données de correction de calage de couleur calculées vers la commande de moteur (140) pour corriger les données concernant la commande de moteur pour une formation d'image.

2. Imprimante selon la revendication 1, dans laquelle la commande de moteur (140) commande un dispositif de développement sélectionné (66) pour développer des images latentes électrostatiques formées sur la courroie photoréceptrice (14), en réponse aux motifs de test, par les dispositifs de balayage optique (30, 40, 50, 60) avec un matériau de développement de couleur unique.

3. Imprimante selon la revendication 1 ou 2, dans laquelle les moyens de détection de position de motif (170) comportent :
des premier et second capteurs de détection de position de motif (171, 173) espacés l'un de l'autre en vis-à-vis d'une surface d'écriture d'image de la courroie photoréceptrice (14), et
des première et seconde sources optiques (172, 174) pour irradier une lumière en direction des zones de détection des premier et second capteurs de détection de position de motif (171, 173).

4. Imprimante selon la revendication 1 ou 2, dans laquelle les moyens de détection de position de motif (170) comportent :
des premier et second capteurs de détection de position de motif (171, 173) espacés l'un de l'autre en vis-à-vis d'un dispositif de transfert (21) destiné à transférer une image formée sur la courroie photoréceptrice (14) sur un papier (23), et
une première et une seconde source optique (172, 174) pour irradier une lumière en direction des zones de détection des premier et second capteurs de détection de position de motif (171, 173).

5. Imprimante selon l'une quelconque des revendications 1 à 4, dans laquelle un dispositif de nettoyage (25) pour nettoyer les motifs de test entièrement développés est installé dans une position prédéterminée sur un trajet de transmission d'image.

6. Procédé de correction d'erreur de calage de couleur destiné à être utilisé dans une imprimante, le procédé comportant les étapes consistant à :
former (310), par une pluralité de dispositifs de balayage optique (30, 40, 50, 60), des images latentes électrostatiques correspondant à des motifs de test de différentes couleurs définis pour la détection d'une erreur de calage de couleur,
développer (320) les images latentes électrostatiques correspondant à des motifs de test avec une pluralité de dispositifs de développement (36, 46, 56, 66),
détecter (330) les positions des motifs de test avec des moyens de détection de position de motif (170),
calculer (340) des quantités d'erreur de calage de couleur à partir d'informations de position de motif de test détectées,
**caractérisé en ce qu'**il comporte les étapes consistant à :
(a) former (310) les images latentes électrostatiques correspondant à des motifs de test sur une courroie photoréceptrice (14) circulant le long d'un trajet formé par une pluralité de rouleaux (11, 12, 13) en utilisant la pluralité de dispositifs de balayage optique (30, 40, 50, 60) agencés pour envoyer un faisceau de lumière sur la courroie photoréceptrice (14) et la lumière reçue émise par une pluralité de détecteurs optiques (38, 48, 58, 68) agencés d'un côté de la courroie photoréceptrice (14) pour détecter une partie de la lumière émise par les dispositifs de balayage optique (30, 40, 50, 60), les dispositifs de balayage optique émettant une lumière jusqu'à un point de chute d'un signal émis par un détecteur optique correspondant (38, 48, 58, 68), le point de chute correspondant à un moment où la lumière projetée atteint le bord de la courroie photoréceptrice (14), l'émission de lumière étant arrêtée pendant un temps de durée prédéterminée à partir du point de chute alors que le dispositif optique se déplace dans une direction de balayage principale, et le motif de test est formé sur la courroie photoréceptrice après le temps de retard prédéterminé,
(b) développer (320) les différentes images latentes électrostatiques de couleur à l'aide d'un seul matériau de développement de couleur par un dispositif de développement sélectionné (66) parmi la pluralité de dispositifs de développement (36, 46, 56, 66) pour fournir des matériaux de développement de différentes couleurs à la courroie photoréceptrice (14),
(c) détecter (330) les positions des motifs de test formés du matériau de développement de couleur unique à l'aide des moyens de détection de position de motif (170),
(d) calculer (340) des quantités d'erreur de calage de couleur à partir des informations de position de motif de test détectées, et
(e) obtenir (360) des données de correction de calage de couleur à partir des quantités d'erreur calculées à l'étape (d) pour corriger les données concernant la formation d'image.

7. Procédé selon la revendication 6, comportant de plus la répétition des étapes (a) à (d) avec les données de correction obtenues à l'étape (e).

8. Procédé selon la revendication 6 ou 7, dans lequel les motifs de test sont fixés pour être alignés sur des positions de début d'écriture d'image et des positions proches correspondant aux deux extrémités d'une zone d'écriture d'image fixée dans la partie médiane de la courroie photoréceptrice (14), et selon des intervalles prédéterminés écartés l'un de l'autre le long de la direction de déplacement de la courroie photoréceptrice (14).

9. Procédé selon l'une quelconque des revendications 6 à 8, dans lequel les motifs de test comportent :
des premiers motifs de test de référence (153) écartés les uns des autres selon des intervalles prédéterminés le long de la direction de sous-balayage sur la position de début d'écriture d'image dans la direction de balayage principale correspondant à une extrémité de la zone d'écriture d'image définie dans la partie médiane de la courroie photoréceptrice (14) et formés par un dispositif de balayage optique de référence (60) sélectionné à partir de la pluralité de dispositifs de balayage optique (30, 40, 50, 60), et
des premiers motifs variables en position (154) formés par des dispositifs de balayage optique (30, 40, 50) sauf le dispositif de balayage optique de référence (60) de sorte que les quantités d'erreur dans la direction de balayage principale varient graduellement le long de la direction de sous-balayage sur la base des positions de formation des premiers motifs de test de référence.

10. Procédé selon l'une quelconque des revendications 6 à 8, dans lequel les motifs de test comportent :
des seconds motifs de référence (155) formés horizontalement écartés les uns des autres selon des intervalles prédéterminés le long de la direction de sous-balayage de la courroie photoréceptrice (14) par le dispositif de balayage optique de référence (60), et
des seconds motifs variables en position (156) formés par des dispositifs de balayage optique (30, 40, 50) à l'exception du dispositif de balayage optique de référence (60) de sorte que des quantités d'erreur dans la direction de sous-balayage varient graduellement le long de la direction de sous-balayage sur la base des positions de formation des seconds motifs de test de référence.

11. Procédé selon l'une quelconque des revendications 6 à 10, dans lequel la courroie photoréceptrice (14) est déplacée plus lentement qu'à une vitesse définie lors d'une impression normale, pendant les étapes (a1) à (d) pour calculer une quantité d'erreur de calage de couleur.
